# EUROPEAN PATENT APPLICATION

(11) **EP 4 711 694 A1**
(43) Date of publication of application: **18.03.2026**
(21) Application number: 24852106.4
(22) Date of filing: 16.07.2024
(51) Int. Cl.: F25D 27/00, F25D 29/00, F25D 23/02, F25D 25/02, F25D 11/02

(54) **REFRIGERATOR AND METHOD FOR CONTROLLING INDOOR LAMP OF FREEZER COMPARTMENT THEREOF**

(30) Priority: 10.08.2023 KR 20230104821
(71) Applicant: Samsung Electronics Co., Ltd., Suwon-si, Gyeonggi-do 16677 (KR)
(72) Inventor: KIM, Sookang, Suwon-si Gyeonggi-do 16677 (KR); KANG, Seungwan, Suwon-si Gyeonggi-do 16677 (KR)
(74) Representative: Appleyard Lees IP LLP
(86) International application number: PCT/KR2024/010216
(87) International publication number: WO 2025/033750

(57) **Abstract**

Disclosed is a refrigerator that includes a refrigerator compartment and a freezer compartment disposed below the refrigerator compartment. The refrigerator comprises: a plurality of light emitting elements arranged below a plurality of refrigerator compartment doors that open and close the refrigerator compartment; and at least one processor which turns on the plurality of light emitting elements when a first drawer-type door among a plurality of drawer-type doors that open and close the freezer compartment is opened, and selectively turns on the plurality of light emitting elements according to a state inside the freezer compartment and the context surrounding the refrigerator when a second drawer-type door disposed below the first drawer-type door among the plurality of drawer-type doors is opened.

## Description

### [Technical Field]

The disclosure relates to a refrigerator for controlling an indoor lamp of a freezer, and a method for controlling an indoor lamp of a freezer thereof.

### [Background Art]

A refrigerator is an electronic apparatus (or, a home appliance) that keeps food refrigerated or frozen. A refrigerator may keep not only food but also medicine, liquor, or cosmetics, etc.

Recently, various types of refrigerators are being released. For example, types of refrigerators are becoming diverse such as a general type refrigerator wherein a freezer is provided in the upper part, a double door type refrigerator wherein freezers are provided on left and right sides, a mixed type refrigerator wherein a freezer is provided in the lower part, etc.

Meanwhile, in case a freezer is arranged in the lower part of a refrigerator, a freezer door that slides in a front-rear direction of the body of the refrigerator and opens and closes the freezer may be provided in the refrigerator.

### [Disclosure of Invention]

### [Solution to Problem]

A refrigerator including a refrigeration chamber and a freezer arranged below the refrigeration chamber according to an embodiment of the disclosure includes a plurality of light emitting elements arranged below a plurality of refrigeration chamber doors that open and close the refrigeration chamber, and at least one processor. The at least one processor is configured to, based on a first drawer-type door among a plurality of drawer-type doors that open and close the freezer being opened, turn on the plurality of light emitting elements. Also, the at least one processor is configured to, based on a second drawer-type door arranged below the first drawer-type door among the plurality of drawer-type doors being opened, selectively turn on the plurality of light emitting elements according to a state inside the freezer and a context around the refrigerator.

Also, the at least one processor may identify whether the freezer is in a state of an abnormal high temperature, and turn on the plurality of light emitting elements according to whether the freezer is in a state of an abnormal high temperature.

In addition, the at least one processor may, based on identifying that the second drawer-type door was opened while the freezer is in a state of an abnormal high temperature, make the plurality of light emitting elements flicker.

Further, the at least one processor may, based on identifying that the second drawer-type door was opened while the freezer is not in a state of an abnormal high temperature, turn on the plurality of light emitting elements according to a sunset time and illumination around the refrigerator.

Also, the at least one processor may, based on identifying that the second drawer-type door was opened while the freezer is not in a state of an abnormal high temperature, identify whether the time when the second drawer-type door was opened is after the sunset time on the basis of the sunset time and the time when the second drawer-type door was opened, and based on identifying that the time when the second drawer-type door was opened is after the sunset time, turn on the plurality of light emitting elements.

In addition, the refrigerator according to an embodiment may further include an illumination sensor, and the at least one processor may, based on identifying that the time when the second drawer-type door was opened is before the sunset time, obtain a brightness value around the refrigerator through the illumination sensor, and based on the brightness value around the refrigerator being smaller than a predetermined value, turn on the plurality of light emitting elements.

Further, the at least one processor may, based on the brightness value around the refrigerator detected through the illumination sensor being greater than or equal to the predetermined value, identify the time that the second drawer-type door was maintained in an opened state, and based on identifying that the opened state of the second drawer-type door was maintained during a first time, turn on a first light emitting element among the plurality of light emitting elements, and based on identifying that the opened state of the second drawer-type door was maintained during a second time longer than the first time, turn on a second light emitting element among the plurality of light emitting elements while the first light emitting element is turned on.

Also, the at least one processor may, based on identifying that the opened state of the second drawer-type door was maintained during a third time longer than the second time, make the plurality of light emitting elements flicker.

A control method of an indoor lamp of a freezer of a refrigerator including a refrigeration chamber and a freezer arranged below the refrigeration chamber according to an embodiment of the disclosure includes the steps of, based on a first drawer-type door among a plurality of drawer-type doors that open and close the freezer being opened, turning on a plurality of light emitting elements arranged below a plurality of refrigeration chamber doors that open and close the refrigeration chamber, and based on a second drawer-type door arranged below the first drawer-type door among the plurality of drawer-type doors being opened, selectively turning on the plurality of light emitting elements according to a state inside the freezer and a context around the refrigerator.

In a non-transitory computer-readable medium storing computer instructions which, when executed by at least one processor of a refrigerator including a refrigeration chamber and a freezer arranged below the refrigeration chamber according to an embodiment of the disclosure, cause the refrigerator to perform operations, the operations include the steps of, based on a first drawer-type door among a plurality of drawer-type doors that open and close the freezer being opened, turning on a plurality of light emitting elements arranged below a plurality of refrigeration chamber doors that open and close the refrigeration chamber, and based on a second drawer-type door arranged below the first drawer-type door among the plurality of drawer-type doors being opened, selectively turning on the plurality of light emitting elements according to a state inside the freezer and a context around the refrigerator.

### [Brief Description of Drawings]

FIG. 1 is a diagram for illustrating a refrigerator according to an embodiment;
FIG. 2 is a diagram for illustrating schematic configurations of a freezer and drawer-type doors according to an embodiment;
FIG. 3 is a diagram for illustrating a location wherein an indoor lamp of a freezer is arranged in a refrigerator according to an embodiment;
FIG. 4A is a block diagram for illustrating a configuration of a refrigerator according to an embodiment;
FIG. 4B is a block diagram for illustrating a detailed configuration of a refrigerator according to an embodiment;
FIG. 5 is a flow chart for illustrating a method of controlling an indoor lamp of a freezer according to opening and closing of a middle drawer-type door according to an embodiment;
FIG. 6A and FIG. 6B are diagrams for illustrating an example of turning on a plurality of light emitting elements in case a middle drawer-type door is opened according to an embodiment;
FIG. 7 and FIG. 8 are flow charts for illustrating a method of controlling an indoor lamp of a freezer according to opening and closing of a lower drawer-type door according to an embodiment;
FIG. 9A to FIG. 9C are diagrams for illustrating an example of making a plurality of light emitting elements flicker in case a lower drawer-type door is opened according to an embodiment;
FIG. 10 is a diagram for illustrating an example of turning on a plurality of light emitting elements in case a lower drawer-type door is opened according to an embodiment;
FIG. 11 is a diagram for illustrating an example of turning on a plurality of light emitting elements in case a lower drawer-type door is opened according to an embodiment;
FIG. 12 and FIG. 13 are diagrams for illustrating an example of turning on a plurality of light emitting elements in case a lower drawer-type door is opened according to an embodiment;
FIG. 14A to FIG. 14C are diagrams for illustrating an example of making a plurality of light emitting elements flicker in case a lower drawer-type door is opened according to an embodiment; and
FIG. 15 is a flow chart for illustrating a refrigerator and a control method of an indoor lamp of a freezer thereof according to an embodiment.

### [Mode for Invention]

Various embodiments of the disclosure and the terms used in the embodiments are not for limiting the technological characteristics described in the disclosure to specific embodiments, but they should be interpreted to include various modifications, equivalents, or alternatives of the embodiments.

Also, with respect to the detailed description of the drawings, similar or related components may be designated by similar reference numerals.

In addition, a singular form of a noun corresponding to an item may include one of the item or a plurality of the items, unless instructed obviously differently in the related context.

Further, in the disclosure, each of the phrases "A or B," "at least one of A and B," "at least one of A or B," "A, B, or C," "at least one of A, B, and C," and "at least one of A, B, or C" and the like may include any one of the items listed together with the phrase among the phrases, or all possible combinations of the listed items.

Also, the term "and/or" includes a combination of a plurality of related components described, or any one component among the plurality of related components described.

In addition, terms such as "first," "second," and the like may be used just to distinguish a component from another component, and are not intended to limit a component in another aspect (e.g.: importance or order).

Further, terms such as 'the front surface,' 'the rear surface,' 'the top surface,' 'the bottom surface," 'the side surface,' 'the left side," 'the right side," 'the upper part,' 'the lower part,' etc. used in the disclosure were defined based on the drawings, and the shapes and locations of respective elements are not limited by these terms.

Also, terms such as "include" and "have" should be construed as designating that there are such characteristics, numbers, steps, operations, elements, components, or a combination thereof described in the disclosure, but not as excluding in advance the existence or possibility of adding one or more of other characteristics, numbers, steps, operations, elements, components, or a combination thereof.

In addition, the description in the disclosure that one element is "connected with," "combined with," "supported by," or "contacted with" another element not only includes a case wherein the elements are directly connected, combined, supported, or contacted, but also a case wherein the elements are indirectly connected, combined, supported, or contacted through a third element.

Further, the description in the disclosure that one element is "on top of" another element not only includes a case wherein the one element contacts the another element, but also a case wherein still another element exists between the two elements.

A refrigerator according to an embodiment may include a body.

"The body" may include an inner cabinet, an outer cabinet arranged on the outside of the inner cabinet, and a heat insulating material provided between the inner cabinet and the outer cabinet.

"The inner cabinet" may include at least one of a case forming a storage chamber, a plate, a panel, or a liner. The inner cabinet may be formed as one body. Alternatively, the inner cabinet may be formed as a plurality of plates are assembled. "The outer cabinet" may form the exterior of the body, and may be coupled to the outer side of the inner cabinet such that the heat insulating material is arranged between the inner cabinet and the outer cabinet.

"The heat insulating material" may insulate the inside of the storage chamber and the outside of the storage chamber such that the temperature inside the storage chamber can be maintained at a set appropriate temperature without being influenced by the outer environment of the storage chamber. According to an embodiment, the heat insulating material may include a foam heat insulating material. The foam heat insulating material may be molded by injecting and foaming urethane foam wherein polyurethane and a foaming agent are mixed between the inner cabinet and the outer cabinet.

According to an embodiment, the heat insulating material may additionally include a vacuum heat insulating material other than the foam heat insulating material, or the heat insulating material may consist only of a vacuum heat insulating material instead of the foam heat insulating material. The vacuum heat insulating material may include a core material, and an outer covering that houses the core material and seals the inside by vacuum or pressure close to vacuum. However, the heat insulating material is not limited to a foam heat insulating material or a vacuum heat insulating material, and may include various materials that can be used for insulation.

"The storage chamber" may include a space limited by the inner cabinet. The storage chamber may further include an inner cabinet that limits the space corresponding to the storage chamber. In the storage chamber, various goods such as food, medicine, cosmetics, etc. may be stored, and the storage chamber may be formed such that at least one side is opened for putting in or taking out goods.

The refrigerator may include one or more storage chambers. When two or more storage chambers are formed in the refrigerator, each storage chamber may have different uses, and may be maintained at different temperatures. For this, each storage chamber may be partitioned from each other by a partition including a heat insulating material.

The storage chamber may be provided to be maintained in an appropriate temperature range according to uses, and may include "a refrigeration chamber," "a freezer," or "a temperature conversion chamber" that are divided according to the uses and/or the temperature ranges. The refrigeration chamber may be maintained at an appropriate temperature for keeping goods refrigerated, and the freezer may be maintained at an appropriate temperature for keeping goods frozen. "Refrigeration" may mean cooling goods to be cold within a limit of not freezing the goods, and as an example, the refrigeration chamber may be maintained in a range of 0°C to 7°C. "Freezing" may mean cooling goods to be frozen or to be maintained in a frozen state, and as an example, the freezer may be maintained in a range of -20°C to -1°C. The temperature conversion chamber may be used as any one of a refrigeration chamber or a freezer by the user's selection or regardless of it.

The storage chamber may be referred to by various names such as "a vegetable chamber," "a fresh chamber," "a cooling chamber," and "an ice making chamber" other than the names such as "a refrigeration chamber," "a freezer," and "a temperature conversion chamber," etc., and the terms such as "a refrigeration chamber," "a freezer," and "a temperature conversion chamber," etc. used below should be understood as meaning that comprehensively includes storage chambers having uses and temperature ranges corresponding to each of them.

According to an embodiment, the refrigerator may include at least one door that is constituted to open and close the opened one side of the storage chamber. The door may be provided to open and close each of the one or more storage chambers, or may be provided such that one door opens and closes the plurality of storage chambers. The door may be rotatably or slidably installed on the front surface of the body.

"The door" may be constituted to seal the storage chamber when the door is closed. The door may include a heat insulating material like the body in order to insulate the storage chamber when the door is closed.

According to an embodiment, the door may include a door outer plate forming the front surface of the door, a door inner plate forming the rear surface of the door and facing the storage chamber, an upper cap, a lower cap, and a door heat insulating material provided in their insides.

On the rim of the door inner plate, a gasket that seals the storage chamber by being adhered to the front surface of the body when the door is closed may be provided. The door inner plate may include a dyke that projects toward the rear side such that a door basket that can keep goods is installed.

According to an embodiment, the door may include a door body, and a front panel that is separably coupled to the front side of the door body and forms the front surface of the door. The door body may include a door outer plate forming the front surface of the door body, a door inner plate forming the rear surface of the door body and facing the storage chamber, an upper cap, a lower cap, and a door heat insulating material provided in their insides.

The refrigerator may be divided into a French door type, a side-by-side type, a bottom mounted freezer (BMF), a top mounted freezer (TMF), or a 1 door refrigerator, etc. according to the arrangement of the doors and the storage chambers.

According to an embodiment, the refrigerator may include a cold air supplying device that is provided to supply cold air to the storage chamber.

"The cold air supplying device" may include a machine, a tool, an electronic apparatus, and/or a system combining them that can cool the storage chamber by generating cold air and guiding the cold air.

According to an embodiment, the cold air supplying device may generate cold air through a freezing cycle including compression, condensation, expansion, and evaporation processes of a refrigerant. For this, the cold air supplying device may include a freezing cycle device including a compressor, a condenser, an expansion device, and an evaporator that can drive a freezing cycle. Also, according to an embodiment, the cold air supplying device may include a semiconductor such as a thermoelectric element. The thermoelectric element may cool the storage chamber with heat generating and cooling operations through a Peltier effect.

According to an embodiment, the refrigerator may include a machine chamber that is provided such that at least some components belonging to the cold air supplying device are arranged.

"The machine chamber" may be provided to be partitioned and insulated from the storage chamber for preventing transmission of heat generated from the components arranged in the machine chamber to the storage chamber. In order to radiate heat to the components arranged inside the machine chamber, the inside of the machine chamber may be constituted to communicate with the outside of the body.

According to an embodiment, the refrigerator may include a dispenser that is provided on the door to provide water and/or ice. The dispenser may be provided on the door such that a user can approach it without opening the door.

According to an embodiment, the refrigerator may include an ice making device that is provided to generate ice. The ice making device may include an ice making tray storing water, an ice moving device separating ice from the ice making tray, and an ice bucket storing ice generated in the ice making tray.

Hereinafter, the refrigerator according to the various embodiments will be described in detail with reference to the accompanying drawings.

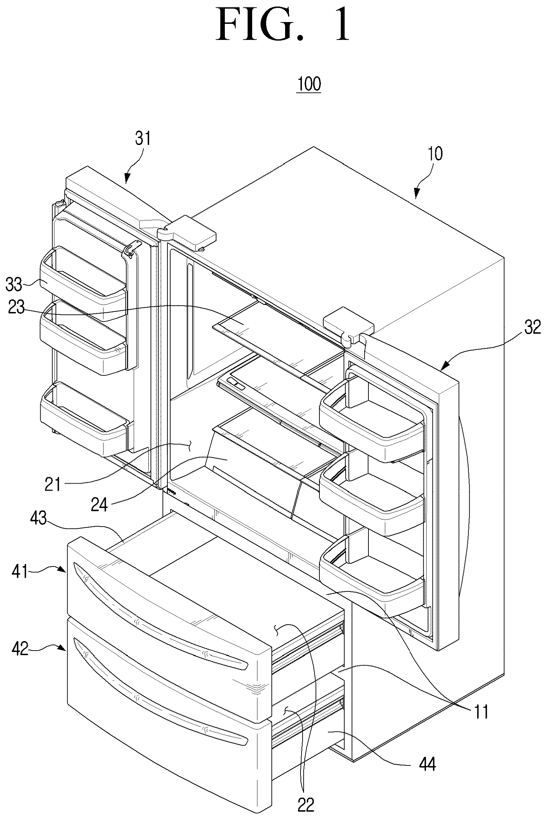

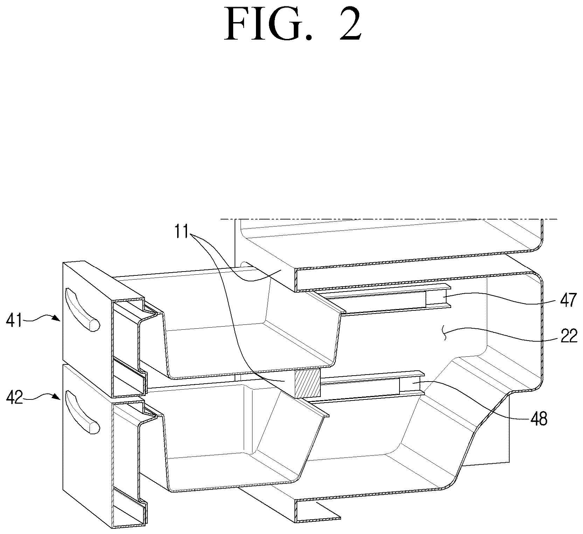

FIG. 1 is a diagram for illustrating a refrigerator according to an embodiment. FIG. 2 is a diagram for illustrating schematic configurations of a freezer and drawer-type doors according to an embodiment.

Referring to FIG. 1 and FIG. 2, the refrigerator 100 may include a body 10 wherein storage chambers 21, 22 are formed, and doors 31, 32, 41, 42 that open and close the opened one sides of the storage chambers 21, 22.

The body 10 may include an outer cabinet, and an inner cabinet provided on the inner side of the outer cabinet so as to form the storage chambers 21, 22. The body 10 may include a heat insulating material provided between the outer cabinet and the inner cabinet. The body 10 may include a partition 11 that partitions the storage chambers 21, 22 in an up-down direction.

The storage chambers 21, 22 may include a refrigeration chamber that keeps goods refrigerated and a freezer that keeps goods frozen. For example, the storage chamber 21 provided in the upper part of the body 10 may be used as the refrigeration chamber 21, and the storage chamber 22 provided in the upper part of the body 10 may be used as the freezer 22.

The storage chambers 21, 22 may be provided such that their front sides are opened so that goods can be put in and taken out, and the opened front sides of the storage chambers 21, 22 may be opened and closed by the doors 31, 32, 41, 42. On the doors 31, 32, 41, 42, handles may be provided.

The doors 31, 32, 41, 42 may include refrigeration chamber doors 31, 32 that open and close the refrigeration chamber 21, and freezer doors 41, 42 that open and close the freezer 22.

The refrigeration chamber doors 31, 32 may be coupled to the body 10 so as to be rotatable in a left-right direction. On the rear surfaces of the refrigeration chamber doors 31, 32, a door guard 33 that can store goods may be provided. In the refrigeration chamber 21, a shelf 23 on which goods can be placed and a drawer-type storage container 24 for keeping goods may be provided.

The freezer doors 41, 42 may be drawer-type doors. The freezer doors 41, 42 may be slidably provided so as to be put into the storage chamber 22 or to be withdrawn from the storage chamber 22. To the freezer doors 41, 42, baskets 43, 44 may be integrally or detachably coupled. When the freezer doors 41, 42 are opened, the baskets 43, 44 may be withdrawn from the freezer 22, and when the freezer doors 41, 42 are closed, the baskets 43, 44 may be put into the freezer 22.

The baskets 43, 44 may be slidably supported by rails. For example, on both sides of the rear surfaces of the freezer doors 41, 42, sliding frames 45, 46 that are extensively formed to the rear side may be provided so as to support the baskets 43, 44. The baskets 43, 44 may be coupled between the sliding frames 45, 46. The sliding frames 45, 46 may be coupled to sliding units 47, 48 provided on both side walls of the freezer 22 such that moving by sliding is possible.

Referring to FIG. 1 and FIG. 2, the refrigerator 100 may be a refrigerator of a French door type including four doors. The four doors may include upper French doors 31, 32, a middle drawer-type door 41, and a lower drawer-type door 42. The middle drawer-type door 41 and the basket 43 coupled to the middle drawer-type door 41 may be referred to as middle drawers, and the lower drawer-type door 42 and the basket 44 coupled to the lower drawer-type door 42 may be referred to as lower drawers. As two separated freezer doors 41, 42 are provided in the space of one freezer 22, the refrigerator 100 may be referred to as a refrigerator of a freezer door separation type model among French door types.

In the refrigerator 100, an indoor lamp may be provided. The indoor lamp may provide an illumination effect such that it can be notified to the user that the door of the refrigeration chamber or the freezer was opened, or the refrigerator can be seen well when the user puts goods into the refrigerator or takes out goods from the refrigerator in a dark environment.

The indoor lamp of the refrigeration chamber may be provided inside the refrigeration chamber 21. When the refrigeration chamber doors 31, 32 are opened, the refrigerator 100 may turn on the indoor lamp of the refrigeration chamber. Light emitted from the indoor lamp of the refrigeration chamber may be irradiated on the inside of the refrigeration chamber 21.

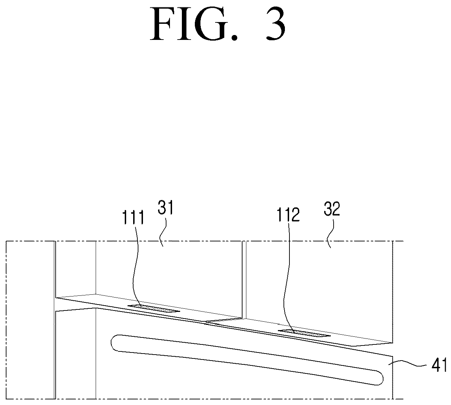

Meanwhile, the indoor lamps of the freezer 111, 112 may be arranged below each refrigeration chamber door 31, 32 as in FIG. 3, and irradiate light to the lower direction. For example, the indoor lamp of the freezer 111 may be arranged on the lower surface of the refrigeration chamber door 31, and the indoor lamp of the freezer 112 may be arranged on the lower surface of the refrigeration chamber door 32.

When the middle drawer-type door 41 is opened, the refrigerator 100 may turn on the indoor lamps of the freezer 111, 112. Light emitted from the indoor lamps of the freezer 111, 112 may be irradiated on the basket 43 withdrawn from the freezer 22.

Meanwhile, as the indoor lamps of the freezer 111, 112 are arranged below the refrigeration chamber doors 31, 32, even if the middle drawer-type door 41 is in a closed state, some of the light emitted from the indoor lamps of the freezer 111, 112 may be blocked by the middle drawer-type door 41. Accordingly, in case the lower drawer-type 42 is opened, even if the indoor lamps of the freezer 111, 112 are turned on, the illumination effect of the indoor lamps of the freezer 111, 112 for the basket 44 withdrawn from the freezer 22 may be slight. Accordingly, for reducing energy consumption, in case the lower drawer-type door 42 is opened, the refrigerator 100 does not turn on the indoor lamps of the freezer 111, 112. However, if the indoor lamps of the freezer 111, 112 are not turned on in all circumstances, when the lower drawer-type door 42 is opened, information related to the freezer 22 cannot be provided to the user by using the indoor lamps of the freezer 111, 112, or inconvenience may be caused to the user who wants to put goods into the basket 44 in a dark environment.

Accordingly, in case the lower drawer-type door 42 is opened, the refrigerator 100 may selectively turn on the indoor lamps of the freezer 111, 112 in consideration of various circumstances, and more detailed explanation in this regard will be described below.

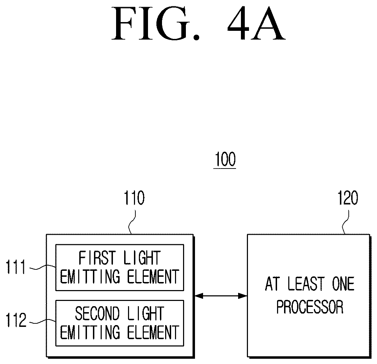

FIG. 4A is a block diagram for illustrating a configuration of a refrigerator according to an embodiment.

Referring to FIG. 4A, the refrigerator 100 may include a plurality of light emitting elements 110 and at least one processor 120. The refrigerator 100 may include a refrigeration chamber 21 and a freezer 22 arranged below the refrigeration chamber 21.

The plurality of light emitting elements 110 may be arranged below a plurality of refrigeration chamber doors 31, 32 that open and close the refrigeration chamber 21.

For example, the plurality of light emitting elements 110 may include a first light emitting element 111 arranged on the lower surface of the refrigeration chamber door 31 and a second light emitting element 112 arranged on the lower surface of the refrigeration chamber door 32. The first light emitting element 111 falls under the indoor lamp of the freezer 111, and may include one or more LEDs. The second light emitting element 112 falls under the indoor lamp of the freezer 112, and may include one or more LEDs.

The at least one processor 120 controls the overall operations of the refrigerator 100. Specifically, the at least one processor 120 may be connected with one or more components of the refrigerator 100, and control the overall operations of the refrigerator 100. The at least one processor 120 may consist of one processor or a plurality of processors. The at least one processor 120 may perform the operations of the electronic device 100 according to the various embodiments of the disclosure by executing the one or more instructions stored in the memory of the refrigerator 100.

Meanwhile, hereinafter, the at least one processor 120 will be referred to as the processor 120, for the convenience of explanation.

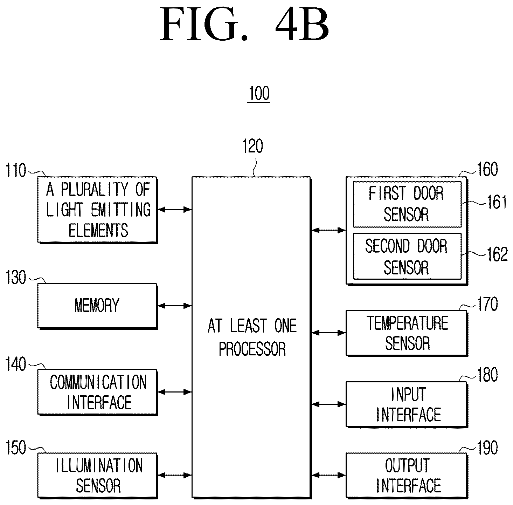

FIG. 4B is a block diagram for illustrating a detailed configuration of a refrigerator according to an embodiment.

Referring to FIG. 4B, the refrigerator 100 may include a plurality of light emitting elements 110, at least one processor 120, memory 130, a communication interface 140, an illumination sensor 150, a door sensor 160, a temperature sensor 170, an input interface 180, and an output interface 190. However, these components are merely exemplary ones, and it is obvious that, in implementing the disclosure, new components can be added in addition to them, or some components can be omitted. Also, in explaining FIG. 4B, explanation regarding parts overlapping with the parts that were already explained will be omitted or abridged.

According to an embodiment, the refrigerator 100 may include a controller for controlling the refrigerator 100.

"The controller" may include memory 130 that stores or memorizes programs and/or data for controlling the refrigerator 100, and a processor 120 that outputs a control signal for controlling the components of the refrigerator 100 such as the cold air supplying device according to the programs and/or the data memorized in the memory 130.

The memory 130 stores or records various kinds of information, data, instructions, programs, etc. necessary for the operations of the refrigerator 100. The memory 130 may memorize temporary data generated while a control signal for controlling the components included in the refrigerator 100 is generated. The memory 130 may include at least one of volatile memory or non-volatile memory or a combination of them.

The processor 120 controls the overall operations of the refrigerator 100. The processor 120 may control one or more components of the refrigerator 100 by executing the program stored in the memory 130. The processor 120 may include a separate NPU that performs operations of an artificial intelligence model. Also, the processor 120 may include a central processing unit, a graphic-dedicated processor (GPU), etc. The processor 120 may generate a control signal for controlling the operations of the cold air supplying device. For example, the processor 120 may receive temperature information of the storage chamber from the temperature sensor, and generate a cooling control signal for controlling the operations of the cold air supplying device based on the temperature information of the storage chamber.

Also, the processor 120 may process a user input of a user interface according to the programs and/or the data memorized/stored in the memory 130, and control the operation of the user interface. The user interface may be provided by using an input interface 180 and an output interface 190. The processor 120 may receive a user input from the user interface. Also, the processor 120 may transmit a display control signal for displaying an image on the user interface in response to a user input and image data to the user interface.

The processor 120 and the memory 130 may be provided integrally, or provided separately. The processor 120 may include one or more processors. For example, the processor 120 may include a main processor and at least one sub processor. The memory 130 may include one or more memories.

According to an embodiment, the refrigerator 100 may include a processor and memory controlling all of the components included in the refrigerator 100, and include a plurality of processors and a plurality of memories individually controlling the components of the refrigerator 100. For example, the refrigerator 100 may include a processor and memory controlling the operation of the cold air supplying device according to an output of the temperature sensor 170. Also, the refrigerator 100 may separately include a processor and memory controlling the operation of the user interface according to a user input.

The communication interface (a communication module) 140 may communicate with external devices such as a server, a mobile device, another home appliance, etc. through an ambient access point (AP). The access point (AP) may connect a local area network (LAN) to which the refrigerator 100 or a user device is connected to a wide area network (WAN) to which a server is connected. The refrigerator 100 or the user device may be connected to the server through the wide area network (WAN). Also, the communication interface 140 may perform Device to Device (D2D) communication with an external device. For example, the communication interface 140 may perform near field communication with an external device not via the access point (AP).

The communication interface 140 may communicate with an external device by using various types of communication methods. For example, the communication interface 140 may include a LAN communication module such as an Ethernet module. The communication interface 140 may include wireless communication modules such as Wi-Fi, Wi-Fi Direct, Bluetooth, Bluetooth Low Energy (BLE), Zigbee, NFC, Z-wave, infrared communication, etc. Also, the communication interface 140 may include a cellular communication module such as 3rd Generation (3G), 3rd Generation Partnership Project (3GPP), Long Term Evolution (LTE), 5G, etc. Further, the communication interface 140 may include a communication module such as a high-definition multimedia interface (HDMI), a universal serial bus (USB), etc.

According to an embodiment, the communication interface 140 may communicate with the server, and transmit and receive various types of data. For example, the communication interface 140 may receive information on the sunset time and information on the current time from the server. When a request for transmission is received from the refrigerator 100, the server may search the sunset time from a web server and obtain information on the sunset time, and obtain information on the current time set at the server, and transmit the obtained information to the refrigerator 100.

The server may be a server that is for registering a device for each user account, and controlling and managing the registered device. A user may access the server through a user account by using an application installed in the user device such as a mobile device, etc. The user may control the refrigerator 100 registered to the server by using the application, and may be provided with various types of information such as a notification related to the refrigerator 100, etc. from the server.

The illumination sensor 150 may detect illumination around the refrigerator 100. The illumination sensor 150 may be arranged in the outer cabinet of the body 10. The illumination sensor 150 may measure an illumination value around the refrigerator 100, and transmit the measured illumination value to the processor 120.

For example, the illumination sensor 150 may be implemented as any one of a photo sensor, a cadmium sulfide (CDS) sensor, an ultra violet (UV) sensor, or an ambient light sensor (ALS), but is not limited to these examples.

The door sensor 160 may detect opening and closing of the freezer chamber doors 41, 42. The processor 120 may identify whether the freezer chamber doors 41, 42 are opened or closed by using the door sensor 160. The door sensor 160 may include a first door sensor 161 for detecting opening and closing of the freezer chamber door 41, and a second door sensor 162 for detecting opening and closing of the freezer chamber door 42.

The first door sensor 161 may include a first magnet provided on the freezer chamber door 41, and a first reed switch provided in the freezer 22. When the freezer chamber door 41 is put into the freezer 22, the first magnet and the first reed switch are arranged in adjacent locations, and the first reed switch is turned on. When the freezer chamber door 41 is withdrawn from the freezer 22, the first magnet gets far from the first reed switch, and the first reed switch is turned off. The processor 120 may identify whether the freezer chamber door 41 is opened or closed according to on/off of the first reed switch.

The second door sensor 162 may include a second magnet provided on the freezer chamber door 42, and a second reed switch provided in the freezer 22. When the freezer chamber door 42 is put into the freezer 22, the second magnet and the second reed switch are arranged in adjacent locations, and the second reed switch is turned on. When the freezer chamber door 42 is withdrawn from the freezer 22, the second magnet gets far from the second reed switch, and the second reed switch is turned off. The processor 120 may identify whether the freezer chamber door 42 is opened or closed according to on/off of the second reed switch.

The temperature sensor 170 may sense the temperatures of the storage chambers 21, 22. The temperature sensor 170 may include a first temperature sensor arranged inside the refrigeration chamber 21, and a second temperature sensor arranged inside the freezer 22. The temperature sensor 170 may sense the temperatures of the storage chambers 21, 22, and provide the temperature information to the processor 120.

The input interface 180 may receive a user input. For example, the input interface 180 may include a key, a touch screen, a microphone, etc. The input interface 180 may receive a user input, and transmit it to the processor 120.

The output interface 190 may include a display, a speaker, etc. The display may be implemented as a touch screen, and receive a user input. The output interface 190 may output various notifications, messages, information, etc. generated in the processor 120.

Hereinafter, a method for the refrigerator 100 to control the indoor lamps of the freezer 111, 112 according to opening and closing of the freezer doors 41, 42 will be explained in detail.

The refrigerator 100 may include a plurality of drawer-type doors 41, 42 that open and close the freezer 22. The plurality of drawer-type doors 41, 42 may include a first drawer-type door 41 and a second drawer-type door 42. The first drawer-type door 41 is a door arranged on the upper side of the second drawer-type door 42. The first drawer-type door 41 is a middle drawer-type door 41. Also, the second drawer-type door 42 is a door arranged on the lower side of the first drawer-type door 41. The second drawer-type door 42 is a lower drawer-type door 42.

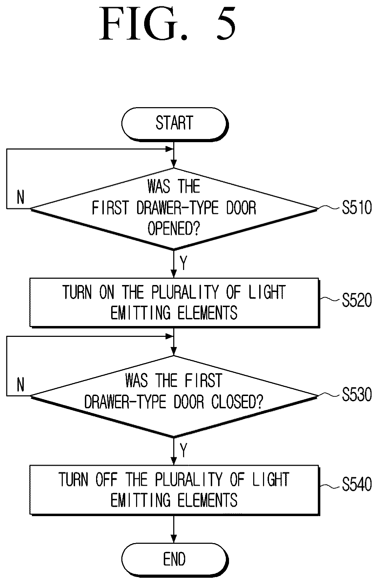

FIG. 5 is a flow chart for illustrating a method of controlling an indoor lamp of a freezer according to opening and closing of a middle drawer-type door according to an embodiment.

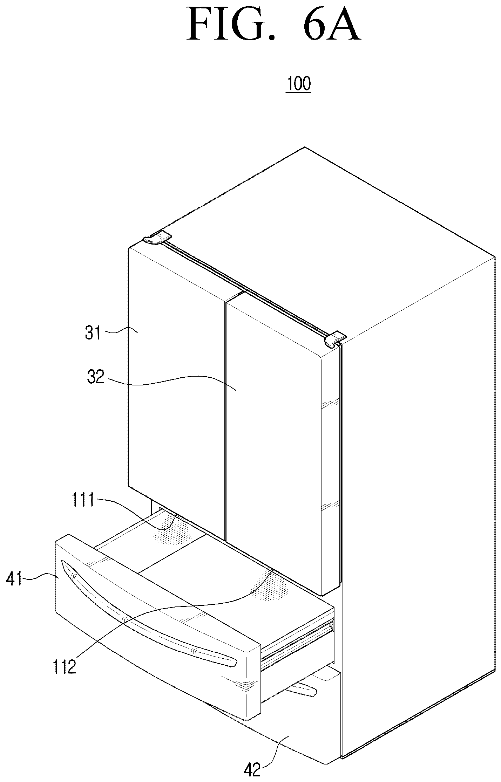

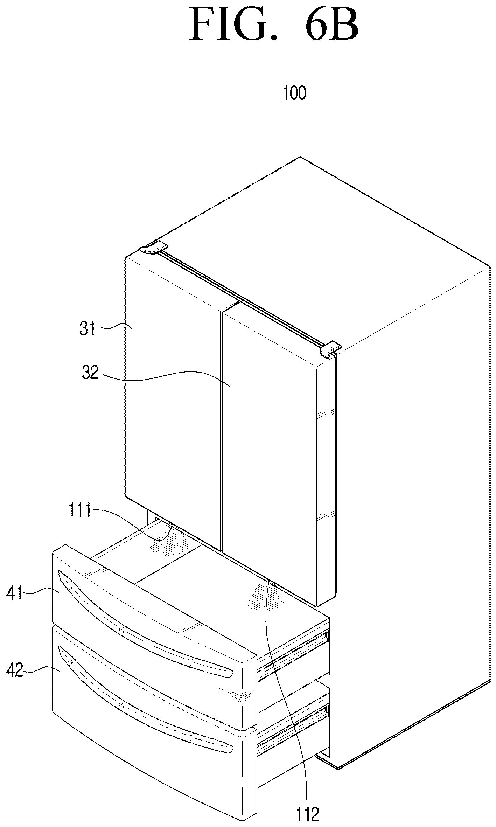

Referring to FIG. 5, When the first drawer-type door 41 among the plurality of drawer-type doors 41, 42 that open and close the freezer 22 is opened in the step S510-Y, the processor 120 turns on the plurality of light emitting elements 110 in the step S520. For example, the processor 120 may identify whether the first drawer-type door 41 was opened by using the first door sensor 161 for detecting opening and closing of the first drawer-type door 41. If it is identified that the first drawer-type door 41 was opened, the processor 120 may turn on the plurality of light emitting elements 110. Regardless of whether the second drawer-type door 42 was opened or closed, if it is identified that the first drawer-type door 41 was opened, the processor 120 may turn on the plurality of light emitting elements 110. For example, as in FIG. 6A and FIG. 6B, not only when the second drawer-type door 42 was closed and the first drawer-type door 41 was opened, but also when the first drawer-type door 41 and the second drawer-type door 42 were opened, the processor 120 may turn on the first light emitting element 111 arranged below the refrigeration chamber door 31 and the second light emitting element 112 arranged below the refrigeration chamber door 32.

When the first drawer-type door 41 is closed in the step S530-Y, the processor 120 turns off the plurality of light emitting elements 110 in the step S540. For example, the processor 120 may identify whether the first drawer-type door 41 was closed by using the first door sensor 161 for detecting opening and closing of the first drawer-type door 41. If it is identified that the first drawer-type door 41 was closed, the processor 120 may turn off the plurality of light emitting elements 110 that were turned on.

As described above, the plurality of light emitting elements 110 may be arranged on the lower surfaces of the plurality of refrigeration chamber doors 31, 32, and the first drawer-type door 41 may be arranged below the plurality of refrigeration chamber doors 31, 32. Accordingly, in case the first drawer-type door 41 is opened, the refrigerator 100 may provide an illumination effect for the basket 43 withdrawn from the freezer 22 by turning on the plurality of light emitting elements 110.

When the second drawer-type door 42 arranged below the first drawer-type door 41 among the plurality of drawer-type doors 41, 42 is opened, the processor 120 may selectively turn on the plurality of light emitting elements 110 according to the state inside the freezer 22 and the context around the refrigerator 100. Turning on the light emitting elements may include repeatedly turning on/off the light emitting elements, i.e., making the light emitting elements flicker.

The state inside the freezer 22 may include whether the freezer 22 is in a state of an abnormal high temperature. Also, the context around the refrigerator 100 may include various circumstances and/or environments around the refrigerator 100. For example, the context around the refrigerator 100 may include a sunset time and/or ambient illumination.

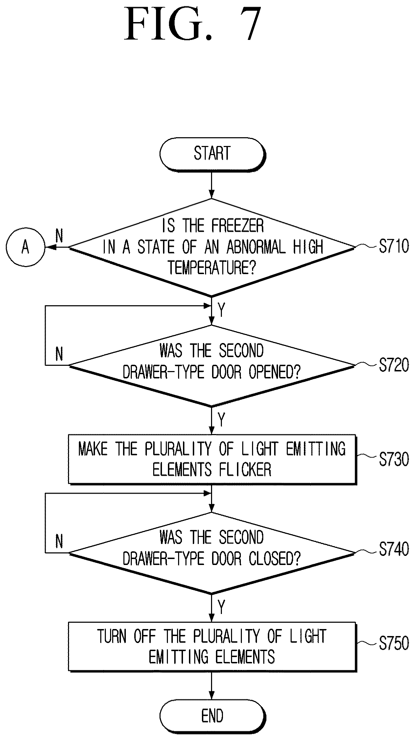

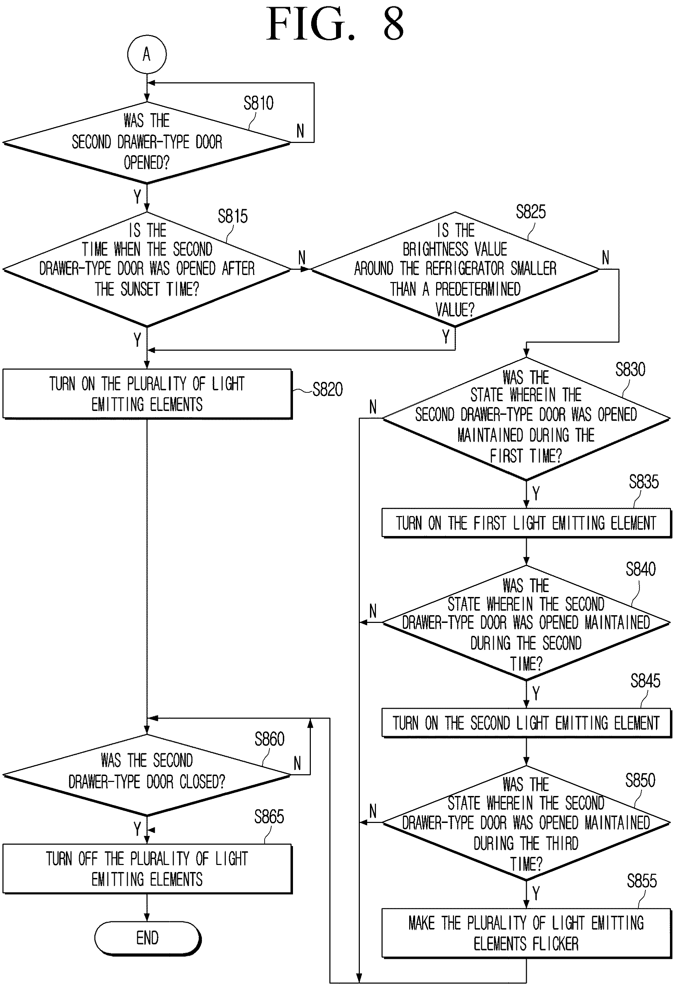

FIG. 7 and FIG. 8 are flow charts for illustrating a method of controlling an indoor lamp of a freezer according to opening and closing of a lower drawer-type door according to an embodiment.

Referring to FIG. 7 and FIG. 8, the processor 120 may identify whether the freezer 22 is in a state of an abnormal high temperature in the step S710. The processor 120 may turn on the plurality of light emitting elements 110 according to whether the freezer 22 is in a state of an abnormal high temperature.

Here, the feature that the state of the freezer 22 is in a state of an abnormal high temperature may mean that the temperature of the freezer 22 that was maintained within an appropriate temperature range rises and reaches a predetermined temperature higher than the appropriate temperature range. As described above, the freezer 22 is for keeping goods frozen, and thus the temperature of the freezer 22 may maintain a range of -20°C to -1°C according to the set temperature. However, as abnormality occurs in the cold air supplying device for cooling the freezer 22 or due to another problem, a case wherein the temperature of the freezer 22 rises may occur. The processor 120 may receive temperature information of the freezer 22 from the temperature sensor 170 (e.g.: a second temperature sensor) for sensing the temperature of the freezer 22, and if it is identified that the temperature of the freezer 22 rose and is the predetermined temperature higher than the appropriate temperature range based on the temperature information, the processor 120 may identify that the freezer 22 is in a state of an abnormal high temperature.

The processor 120 may identify whether the second drawer-type door 42 was opened by using the second door sensor 162 for detecting opening and closing of the second drawer-type door 42.

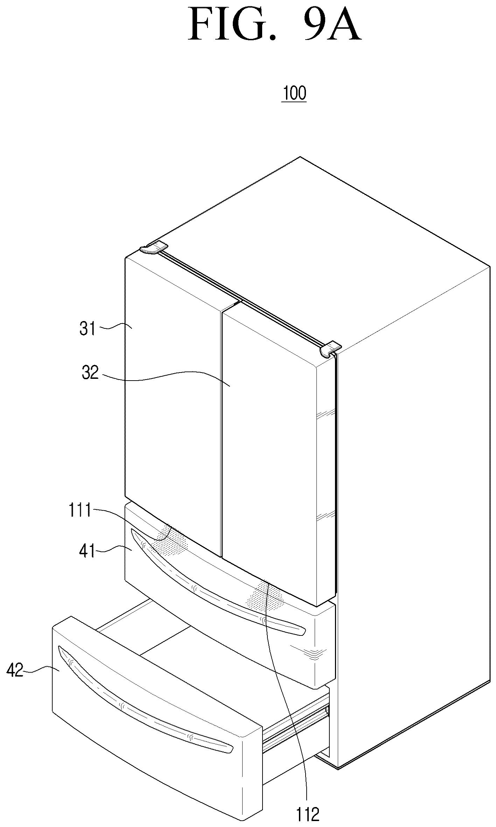

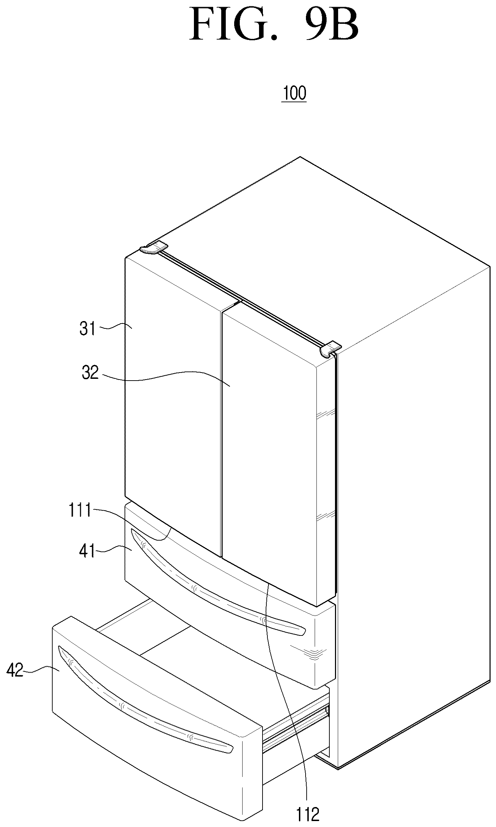

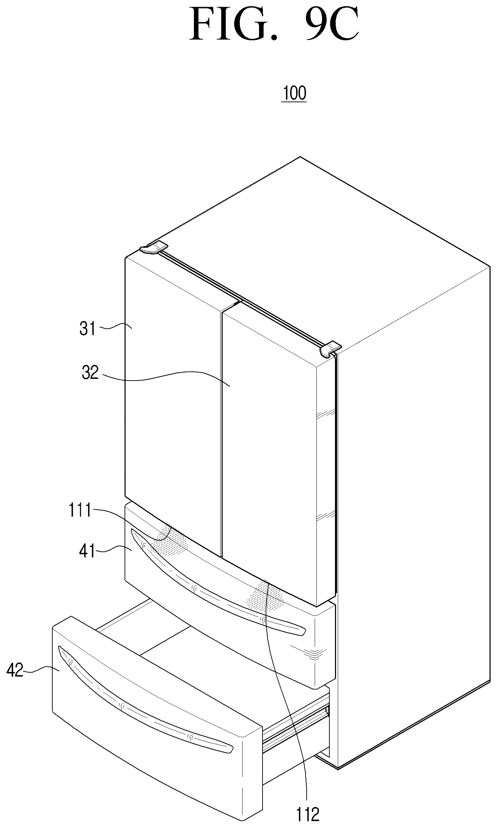

If it is identified that the second drawer-type door 42 was opened while the freezer 22 is in a state of an abnormal high temperature in the steps S710-Y and S720-Y, the processor 120 may make the plurality of light emitting elements 110 flicker in the step S730. For example, as in FIG. 9A to FIG. 9C, if it is identified that the second drawer-type door 42 was opened in a state of an abnormal high temperature, the processor 120 may repeatedly turn on/off the first light emitting element 111 arranged below the refrigeration chamber door 31 and the second light emitting element 112 arranged below the refrigeration chamber door 32.

When the second drawer-type door 42 is closed in the step S740-Y, the processor 120 turns off the plurality of light emitting elements 110 in the step S750. For example, the processor 120 may identify whether the second drawer-type door 42 was closed by using the second door sensor 162 for detecting opening and closing of the second drawer-type door 42. If it is identified that the second drawer-type door 42 was closed, the processor 120 may turn off the plurality of light emitting elements 110 that were flickering.

Meanwhile, if it is identified that the second drawer-type door 42 was opened while the freezer 22 is not in a state of an abnormal high temperature, the processor 120 may turn on the plurality of light emitting elements 110 according to the sunset time and the brightness around the refrigerator 100.

The feature that the freezer 22 is not in a state of an abnormal high temperature may mean a state wherein the temperature of the freezer 22 maintains within the appropriate temperature range.

If it is identified that the second drawer-type door 42 was opened while the freezer 22 is not in a state of an abnormal high temperature in the steps S710-N and S810-Y, the processor 120 may identify whether the time when the second drawer-type door 42 was opened is after the sunset time based on the sunset time and the time when the second drawer-type door 42 was opened in the step S815.

For example, if it is identified that the second drawer-type door 42 was opened, the processor 120 may transmit a request for transmission of information on the sunset time and information on the current time to the server through the communication interface 140, and receive the information obtained by the server according to the request for transmission from the server through the communication interface 140. The processor 120 may identify that the current time received from the server is the time when the second drawer-type door 42 was opened, and identify whether the time when the second drawer-type door 42 was opened is before the sunset time or after the sunset time by comparing the time when the second drawer-type door 42 was opened and the sunset time received from the server in the step S815.

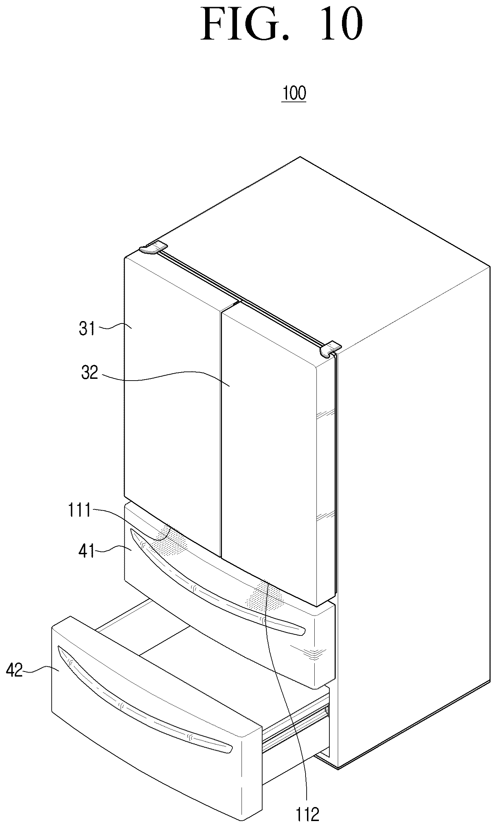

If it is identified that the time when the second drawer-type door 42 was opened is after the sunset time in the step S815-Y, the processor 120 may turn on the plurality of light emitting elements 110 in the step S820. For example, as in FIG. 10, if it is identified that the time when the second drawer-type door 42 was opened is after the sunset time, the processor 120 may turn on the first light emitting element 111 arranged below the refrigeration chamber door 31 and the second light emitting element 112 arranged on the lower surface of the refrigeration chamber door 32.

If it is identified that the time when the second drawer-type door 42 was opened is before the sunset time, the processor 120 may obtain information on a brightness value around the refrigerator 100 by using the illumination sensor 150. For example, the brightness value may be an illumination value (e.g.: lux). The processor 120 may obtain an illumination value corresponding to the brightness around the refrigerator 100 through the illumination sensor 150.

The processor 120 may identify whether the brightness value around the refrigerator 100 detected through the illumination sensor 150 is smaller than a predetermined value in the step S825. For example, the processor 120 may identify whether the brightness value around the refrigerator 100 is smaller than a predetermined value or greater than or equal to a predetermined value by comparing the brightness value around the refrigerator 100 obtained through the illumination sensor 150 and the predetermined value. For example, the predetermined value may be 5lux, but is not limited to this example. The predetermined value may be set as various values, and may be changed according to a user input.

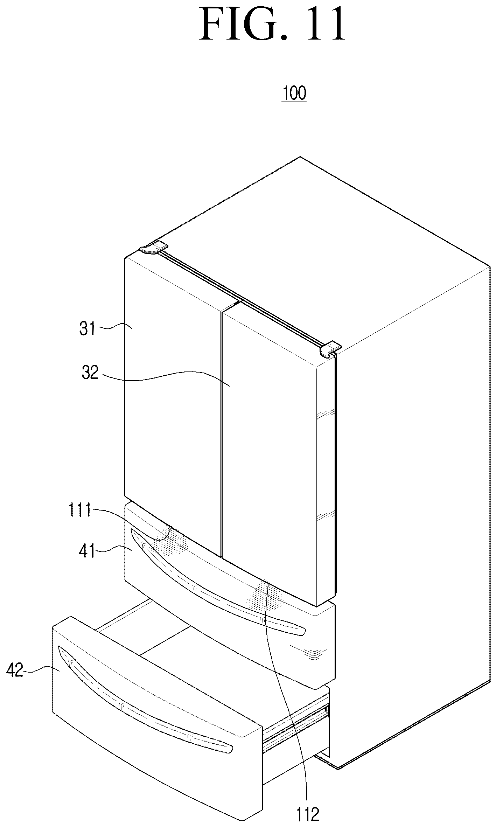

If the brightness value around the refrigerator 100 obtained through the illumination sensor 150 is smaller than the predetermined value in the step S825-Y, the processor 120 may turn on the plurality of light emitting elements 110 in the step S820. For example, as in FIG. 11, if it is identified that the time when the second drawer-type door 42 was opened is before the sunset time, and the brightness value around the refrigerator 100 obtained through the illumination sensor 150 is smaller than the predetermined value, the processor 120 may turn on the first light emitting element 111 arranged below the refrigeration chamber door 31 and the second light emitting element 112 arranged below the refrigeration chamber door 32.

If the brightness value around the refrigerator 100 obtained through the illumination sensor 150 is greater than or equal to the predetermined value in the step S825-N, the processor 120 may identify the time that the second drawer-type door 42 was maintained in an opened state. For example, the refrigerator 100 may include a timer for counting the time that the second drawer-type door 42 was opened. The processor 120 may drive the timer from the time point when the second drawer-type door 42 was opened to the time point that it was closed, and identify the time that the second drawer-type door 42 was maintained in an opened state based on the time information counted by the timer.

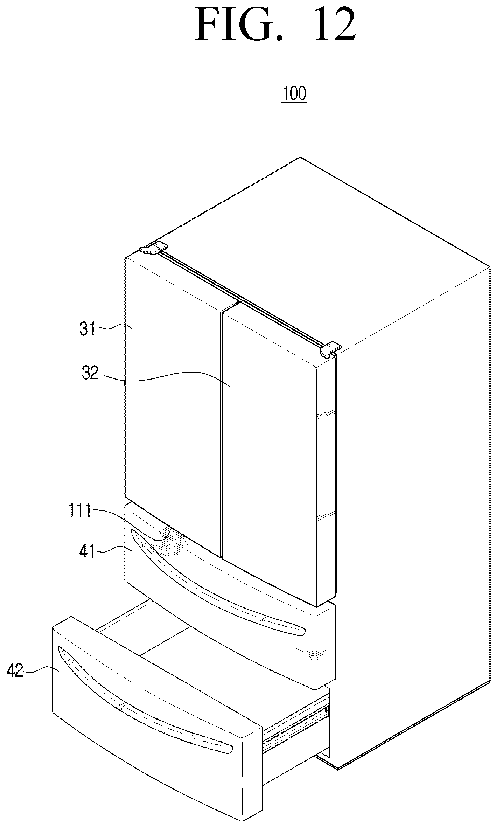

If it is identified that the opened state of the second drawer-type door 42 was maintained during a first time in the step S830-Y, the processor 120 may turn on the first light emitting element 111 among the plurality of light emitting elements 110 in the step S835. For example, the first time may be two minutes. However, the disclosure is not limited to this example, and the first time may be set as various values, and may be changed according to a user input. For example, as in FIG. 12, if it is identified that the second drawer-type door 42 was opened consecutively for two minutes, the processor 120 may turn on the first light emitting element 111 arranged below the refrigeration chamber door 31 among the plurality of light emitting elements 110. However, the disclosure is not limited to this example, and the processor 120 may turn on the second light emitting element 112 arranged below the refrigeration chamber door 32 among the plurality of light emitting elements 110.

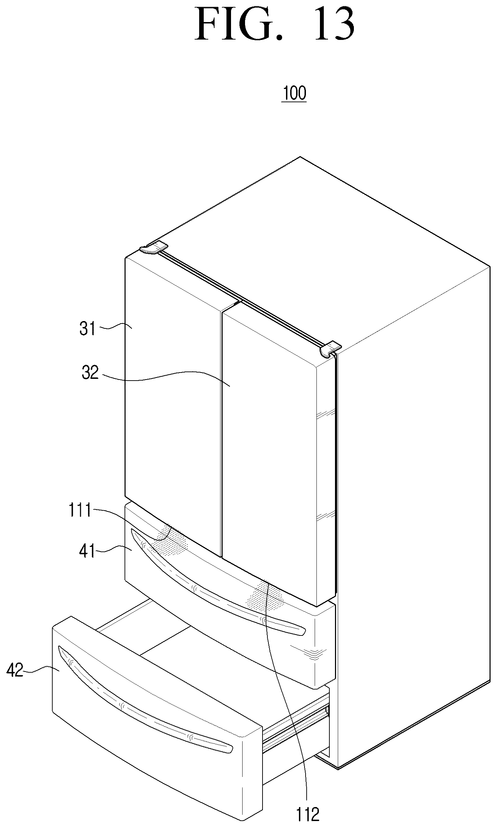

If it is identified that the opened state of the second drawer-type door 42 was maintained during a second time in the step S840-Y, the processor 120 may turn on the second light emitting element 112 among the plurality of light emitting elements 110 while the first light emitting element 111 is turned on in the step S845. The second time may be a longer time than the first time. For example, the second time may be four minutes. However, the disclosure is not limited to this example, and the second time may be set as various values, and may be changed according to a user input. In other words, if a state wherein the second drawer-type door 42 is kept open without being closed is maintained after the first time passed, and it is identified that the second drawer-type door 42 was opened during the second time, the processor 120 may turn on the remaining light emitting elements in a turned-off state among the plurality of light emitting elements 110. For example, as in FIG. 13, if it is identified that the second drawer-type door 42 was opened consecutively for four minutes, the processor 120 may turn on the second light emitting element 112 arranged below the refrigeration chamber door 32. Accordingly, both of the first light emitting element 111 and the second light emitting element 112 may be turned on. However, the disclosure is not limited to this example, and in case the second light emitting element 112 was turned on and the first light emitting element 111 was turned off, the processor 120 may additionally turn on the first light emitting element 111.

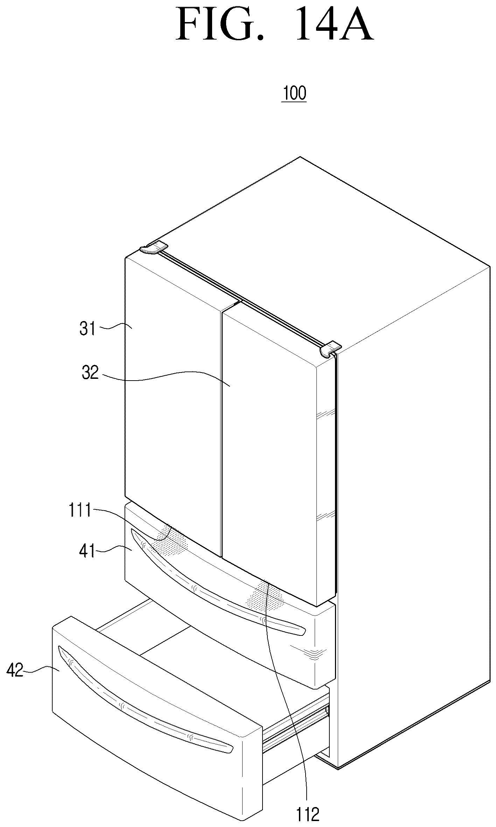

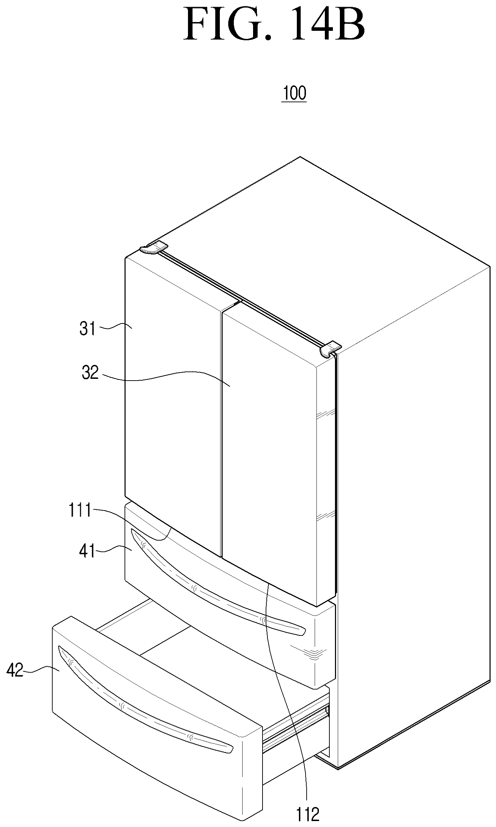

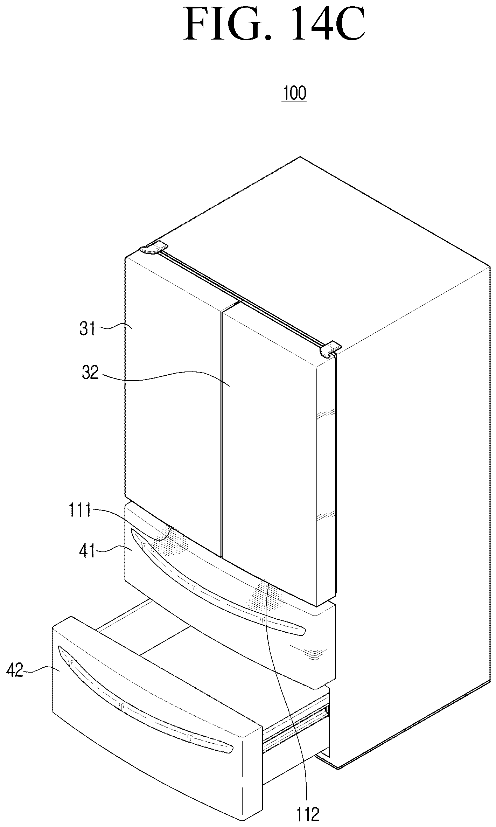

If it is identified that the opened state of the second drawer-type door 42 was maintained during a third time in the step S850-Y, the processor 120 may make the plurality of light emitting elements 110 flicker in the step S855. The third time may be a longer time than the second time. For example, the third time may be five minutes. However, the disclosure is not limited to this example, and the third time may be set as various values, and may be changed according to a user input. In other words, if a state wherein the second drawer-type door 42 is kept open without being closed is maintained after the second time passed, and it is identified that the second drawer-type door 42 was opened during the third time, the processor 120 may make the plurality of light emitting elements 110 that were turned on flicker. For example, as in FIG. 14A to FIG. 14C, if it is identified that the second drawer-type door 42 was opened consecutively for five minutes, the processor 120 may repeatedly turn on/off the first light emitting element 111 arranged below the refrigeration chamber door 31 and the second light emitting element 112 arranged below the refrigeration chamber door 32.

When the second drawer-type door 42 is closed in the step S860-Y, the processor 120 turns off the plurality of light emitting elements 110 in the step S865. For example, the processor 120 may identify whether the second drawer-type door 42 was closed by using the second door sensor 162 for detecting opening and closing of the second drawer-type door 42. If it is identified that the second drawer-type door 42 was closed, the processor 120 may turn off the plurality of light emitting elements 110.

Meanwhile, in the aforementioned example, it was explained that, if the second drawer-type door 42 that was maintained in an opened state during the third time or longer is closed, the processor 120 turns off the plurality of light emitting elements 110 that were flickering. However, the disclosure is not limited to this example, and even if the second drawer-type door 42 was not closed, if it is identified that the opened state of the second drawer-type door 42 was maintained during a fourth time, the processor 120 may turn off the plurality of light emitting elements 110. For example, the fourth time may be 10 minutes. However, the disclosure is not limited to this example, and the fourth time may be set as various values, and may be changed according to a user input.

According to the various embodiments of the disclosure as above, in case the freezer 22 is not in a state of an abnormal high temperature, and the second drawer-type door 42 was closed within the predetermined time after being opened, the plurality of light emitting elements 110 may not be turned on. However, in case the freezer 22 is in a state of an abnormal high temperature, or the second drawer-type door 42 was opened during a long time, the processor 120 may turn on the plurality of light emitting elements 110, or make them flicker. Accordingly, the refrigerator 100 can reduce energy consumption, and at the same time, the refrigerator 100 can provide information on a specific circumstance such as an abnormal high temperature and/or opening of the door during a long time, etc. to the user by using an indoor lamp of the freezer when the second drawer-type door 42 is opened, and thus convenience and usability can be improved, and in particular, accessibility of a person with low vision (or a visually impaired person) can be improved.

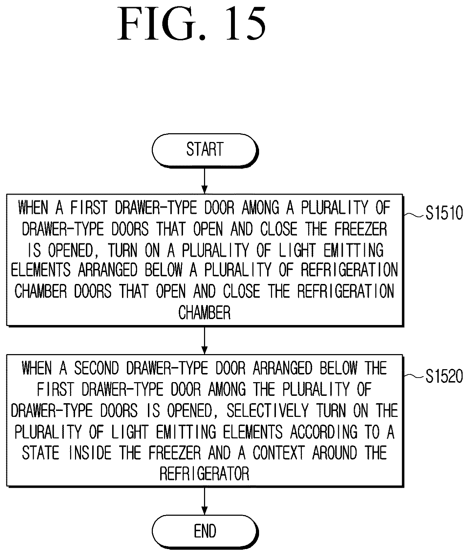

FIG. 15 is a flow chart for illustrating a refrigerator and a control method of an indoor lamp of a freezer thereof according to an embodiment.

The refrigerator may include a refrigeration chamber and a freezer arranged below the refrigeration chamber.

When a first drawer-type door among a plurality of drawer-type doors that open and close the freezer is opened, a plurality of light emitting elements arranged below a plurality of refrigeration chamber doors that open and close the refrigeration chamber are turned on in the step S1510.

When a second drawer-type door arranged below the first drawer-type door among the plurality of drawer-type doors is opened, the plurality of light emitting elements are selectively turned on according to a state inside the freezer and a context around the refrigerator in the step S1520.

In the step S1520, it may be identified whether the freezer is in a state of an abnormal high temperature, and the plurality of light emitting elements may be turned on according to whether the freezer is in a state of an abnormal high temperature.

In the step S1520, if it is identified that the second drawer-type door was opened while the freezer is in a state of an abnormal high temperature, the plurality of light emitting elements may be made to flicker.

In the step S1520, if it is identified that the second drawer-type door was opened while the freezer is not in a state of an abnormal high temperature, the plurality of light emitting elements may be turned on according to a sunset time and illumination around the refrigerator.

In the step S1520, if it is identified that the second drawer-type door was opened while the freezer is not in a state of an abnormal high temperature, it may be identified whether the time when the second drawer-type door was opened is after the sunset time based on the sunset time and the time when the second drawer-type door was opened, and if it is identified that the time when the second drawer-type door was opened is after the sunset time, the plurality of light emitting elements may be turned on.

In the step S1520, if it is identified that the time when the second drawer-type door was opened is before the sunset time, a brightness value around the refrigerator may be obtained, and if the brightness value around the refrigerator is smaller than a predetermined value, the plurality of light emitting elements may be turned on.

In the step S1520, if the brightness value around the refrigerator is greater than or equal to the predetermined value, the time that the second drawer-type door was maintained in an opened state may be identified, and if it is identified that the opened state of the second drawer-type door was maintained during a first time, a first light emitting element among the plurality of light emitting elements may be turned on, and if it is identified that the opened state of the second drawer-type door was maintained during a second time longer than the first time, a second light emitting element among the plurality of light emitting elements may be turned on.

In the step S1520, if it is identified that the opened state of the second drawer-type door was maintained during a third time longer than the second time, the plurality of light emitting elements may be made to flicker.

Meanwhile, according to an embodiment of the disclosure, the aforementioned various embodiments may be implemented as software including instructions stored in machine-readable storage media, which can be read by machines (e.g.: computers). The machines refer to devices that call instructions stored in a storage medium, and can operate according to the called instructions, and the devices may include an electronic apparatus according to the aforementioned embodiments (e.g.: an electronic apparatus A). In case an instruction is executed by a processor, the processor may perform a function corresponding to the instruction by itself, or by using other components under its control. An instruction may include a code that is generated or executed by a compiler or an interpreter. A storage medium that is readable by machines may be provided in the form of a non-transitory storage medium. Here, the term 'non-transitory' only means that a storage medium does not include signals, and is tangible, but does not indicate whether data is stored in the storage medium semi-permanently or temporarily.

Also, according to an embodiment of the disclosure, the methods according to the aforementioned various embodiments may be provided while being included in a computer program product. A computer program product refers to a product, and it can be traded between a seller and a buyer. A computer program product can be distributed on-line in the form of a storage medium that is readable by machines (e.g.: compact disc read only memory (CD-ROM)), or through an application store (e.g.: Play Store^{™}). In the case of on-line distribution, at least a portion of a computer program product may be stored in a storage medium such as the server of the manufacturer, the server of the application store, and the memory of the relay server at least temporarily, or may be generated temporarily.

In addition, according to an embodiment of the disclosure, the aforementioned various embodiments may be implemented in a recording medium that can be read by a computer or an apparatus similar to a computer, by using software, hardware, or a combination thereof. In some cases, the embodiments described in this specification may be implemented as a processor itself. According to implementation by software, the embodiments such as procedures and functions described in this specification may be implemented as separate software modules. Each of the software modules can perform one or more functions and operations described in this specification.

Meanwhile, computer instructions for performing processing operations of an apparatus according to the aforementioned various embodiments may be stored in a non-transitory computer-readable medium. Computer instructions stored in such a non-transitory computer-readable medium make the processing operations at an apparatus according to the aforementioned various embodiments performed by a specific machine, when the instructions are executed by the processor of the specific machine. A non-transitory computer-readable medium refers to a medium that stores data semi-permanently, and is readable by machines, but not a medium that stores data for a short moment such as a register, a cache, and memory. As specific examples of a non-transitory computer-readable medium, there may be a CD, a DVD, a hard disc, a blue-ray disc, a USB, a memory card, ROM and the like.

Also, each of the components (e.g.: a module or a program) according to the aforementioned various embodiments may consist of a singular object or a plurality of objects. Further, among the aforementioned corresponding sub components, some sub components may be omitted, or other sub components may be further included in the various embodiments. Alternatively or additionally, some components (e.g.: a module or a program) may be integrated as an object, and perform functions that were performed by each of the components before integration identically or in a similar manner. Also, operations performed by a module, a program, or other components according to the various embodiments may be executed sequentially, in parallel, repetitively, or heuristically. Or, at least some of the operations may be executed in a different order or omitted, or other operations may be added.

Also, while preferred embodiments of the disclosure have been shown and described, the disclosure is not limited to the aforementioned specific embodiments, and it is apparent that various modifications may be made by those having ordinary skill in the technical field to which the disclosure belongs, without departing from the gist of the disclosure as claimed by the appended claims. Further, it is intended that such modifications are not to be interpreted independently from the technical idea or prospect of the disclosure.

## Claims

1. A refrigerator comprising a refrigeration chamber and a freezer arranged below the refrigeration chamber, the refrigerator comprising:
a plurality of light emitting elements arranged below a plurality of refrigeration chamber doors that open and close the refrigeration chamber; and
at least one processor configured to:
based on a first drawer-type door among a plurality of drawer-type doors that open and close the freezer being opened, turn on the plurality of light emitting elements, and
based on a second drawer-type door arranged below the first drawer-type door among the plurality of drawer-type doors being opened, selectively turn on the plurality of light emitting elements according to a state inside the freezer and a context around the refrigerator.

2. The refrigerator of claim 1,
wherein the at least one processor is configured to:
identify whether the freezer is in a state of an abnormal high temperature, and turn on the plurality of light emitting elements according to whether the freezer is in a state of an abnormal high temperature.

3. The refrigerator of claim 2,
wherein the at least one processor is configured to:
based on identifying that the second drawer-type door was opened while the freezer is in a state of an abnormal high temperature, make the plurality of light emitting elements flicker.

4. The refrigerator of claim 2,
wherein the at least one processor is configured to:
based on identifying that the second drawer-type door was opened while the freezer is not in a state of an abnormal high temperature, turn on the plurality of light emitting elements according to a sunset time and illumination around the refrigerator.

5. The refrigerator of claim 4,
wherein the at least one processor is configured to:
based on identifying that the second drawer-type door was opened while the freezer is not in a state of an abnormal high temperature, identify whether the time when the second drawer-type door was opened is after the sunset time on the basis of the sunset time and the time when the second drawer-type door was opened, and based on identifying that the time when the second drawer-type door was opened is after the sunset time, turn on the plurality of light emitting elements.

6. The refrigerator of claim 5, further comprising:
an illumination sensor,
wherein the at least one processor is configured to:
based on identifying that the time when the second drawer-type door was opened is before the sunset time, obtain a brightness value around the refrigerator through the illumination sensor, and based on the brightness value around the refrigerator being smaller than a predetermined value, turn on the plurality of light emitting elements.

7. The refrigerator of claim 6,
wherein the at least one processor is configured to:
based on the brightness value around the refrigerator detected through the illumination sensor being greater than or equal to the predetermined value, identify the time that the second drawer-type door was maintained in an opened state,
based on identifying that the opened state of the second drawer-type door was maintained during a first time, turn on a first light emitting element among the plurality of light emitting elements, and
based on identifying that the opened state of the second drawer-type door was maintained during a second time longer than the first time, turn on a second light emitting element among the plurality of light emitting elements while the first light emitting element is turned on.

8. The refrigerator of claim 7,
wherein the at least one processor is configured to:
based on identifying that the opened state of the second drawer-type door was maintained during a third time longer than the second time, make the plurality of light emitting elements flicker.

9. A control method of an indoor lamp of a freezer of a refrigerator comprising a refrigeration chamber and a freezer arranged below the refrigeration chamber, the method comprising:
based on a first drawer-type door among a plurality of drawer-type doors that open and close the freezer being opened, turning on a plurality of light emitting elements arranged below a plurality of refrigeration chamber doors that open and close the refrigeration chamber; and
based on a second drawer-type door arranged below the first drawer-type door among the plurality of drawer-type doors being opened, selectively turning on the plurality of light emitting elements according to a state inside the freezer and a context around the refrigerator.

10. The control method of claim 9,
wherein the selectively turning on the plurality of light emitting elements comprises:
identifying whether the freezer is in a state of an abnormal high temperature; and
turning on the plurality of light emitting elements according to whether the freezer is in a state of an abnormal high temperature.

11. The control method of claim 10,
wherein the selectively turning on the plurality of light emitting elements comprises:
based on identifying that the second drawer-type door was opened while the freezer is in a state of an abnormal high temperature, making the plurality of light emitting elements flicker.

12. The control method of claim 10,
wherein the selectively turning on the plurality of light emitting elements comprises:
based on identifying that the second drawer-type door was opened while the freezer is not in a state of an abnormal high temperature, turning on the plurality of light emitting elements according to a sunset time and illumination around the refrigerator.

13. The control method of claim 12,
wherein the selectively turning on the plurality of light emitting elements comprises:
based on identifying that the second drawer-type door was opened while the freezer is not in a state of an abnormal high temperature, identifying whether the time when the second drawer-type door was opened is after the sunset time on the basis of the sunset time and the time when the second drawer-type door was opened; and
based on identifying that the time when the second drawer-type door was opened is after the sunset time, turning on the plurality of light emitting elements.

14. The control method of claim 13,
wherein the selectively turning on the plurality of light emitting elements comprises:
based on identifying that the time when the second drawer-type door was opened is before the sunset time, obtaining a brightness value around the refrigerator; and
based on the brightness value around the refrigerator being smaller than a predetermined value, turning on the plurality of light emitting elements.

15. The control method of claim 14,
wherein the selectively turning on the plurality of light emitting elements comprises:
based on the brightness value around the refrigerator being greater than or equal to the predetermined value, identifying the time that the second drawer-type door was maintained in an opened state;
based on identifying that the opened state of the second drawer-type door was maintained during a first time, turning on a first light emitting element among the plurality of light emitting elements; and
based on identifying that the opened state of the second drawer-type door was maintained during a second time longer than the first time, turning on a second light emitting element among the plurality of light emitting elements while the first light emitting element is turned on.
